# EUROPEAN PATENT APPLICATION

(11) **EP 1 031 283 A1**
(43) Date of publication of application: **30.08.2000**
(21) Application number: 99940207.6
(22) Date of filing: 18.08.1999
(51) Int. Cl.: A21C 15/04, B26D 3/24

(54) **PIZZA CUTTING DEVICE**

(30) Priority: 27.08.1998 ES 9801820
(71) Applicant: Serra Pastor, Eva, 03700 Denia (ES)
(72) Inventor: Serra Pastor, Eva, 03700 Denia (ES)
(74) Representative: Elzaburu Marquez, Alberto
(86) International application number: ES9900263
(87) International publication number: WO0011959

(57) **Abstract**

The pizza cutting device is comprised of a structure (1) wherein is housed a blade (2) which is biased by springs (11) which maintain the blade in a retracted position. Said structure (1) emerges from a central body (3) from which extend two arms (4) which are parallel to each other and located at a small distance under the structure (1). A handle (5) with a lower lever (6) is arranged opposite to the structure. When the lever is actuated, it presses onto the blade (2) making it move forward towards the arms (4) which support the pizza to be cut.

## Description

### OBJECT OF THE INVENTION

The present invention, as the title of this specification states, refers to a pizza cutting device, made up of a manual utensil or tool with which perfect cuts may be carried out, and which is also very easy to use.

### BACKGROUND OF THE INVENTION

At the present time, the cutting of pizzas or portions of the same is carried out with the classic rotatable disc provided with a handle. In other cases cutting is carried out with a simple knife but it happens that on certain occasions, depending on the thickness of the pizza base, degree of cooking, and the ingredients included, it is laborious and uncomfortable to carry out cutting by these customary procedures.

### DESCRIPTION OF THE INVENTION

In general terms, the pizza cutting device which constitutes the object of the invention is comprised of a structure or casing in which a rectangular blade is enclosed, which may emerge through an opening when a manual lever is actuated, this lever being close to an extension which makes up the handle or grip of the cutting device. The blade is biased by springs which maintain it in a retracted position, and which also recover the operating lever.

Under the structure and at a certain distance from it, in a parallel position, there is a pair of arms upon which the item to be cut will rest, in such a way that when the lever is operated and the blade descends, the edge of the same positions itself beyond the supporting plane made up of the pair of support arms, which remain one on either side of the blade.

If the length of the cut to be carried out exceeds that of the blade, it is necessary to move the cutting device forwards, to which end the portion of the body of the cutting device that is comprised between the structure and the parallel support arms has a tapering which defines a wedge to make this operation possible.

To aid understanding of the features of the invention, this specification is accompanied by sheets of drawings which form an integral part of the same and whose figures, in an illustrative and non-restrictive way, represent the following:

### BRIEF DESCRIPTION OF THE DRAWINGS

**Figure 1.**- Is a perspective view of the pizza cutting device which is the object of the invention.
**Figure 2.**- Is a partial longitudinal elevation view of the same pizza cutting device of Figure 1, with the enclosing half-casing removed so as to observe the inner elements of the structure.
**Figure 3.**- Is a longitudinal elevation view of the operating lever of the cutting device.
**Figure 4.**- Is a perspective view of the cutting blade.

### DESCRIPTION OF THE PREFERRED EMBODIMENT

With reference to the numbering adopted in the drawings, we may see how the pizza cutting device proposed by the invention is comprised of the structure (1) which houses the blade (2) inside, which emerges from a central body (3) from whose lower part the arms (4) also emerge. The pizza to be cut is introduced under the structure (1) and above the pair of support arms (4) and subsequently the cutting blade (2) is lowered, which moves forwards until it exceeds the plane defined by the arms (4).

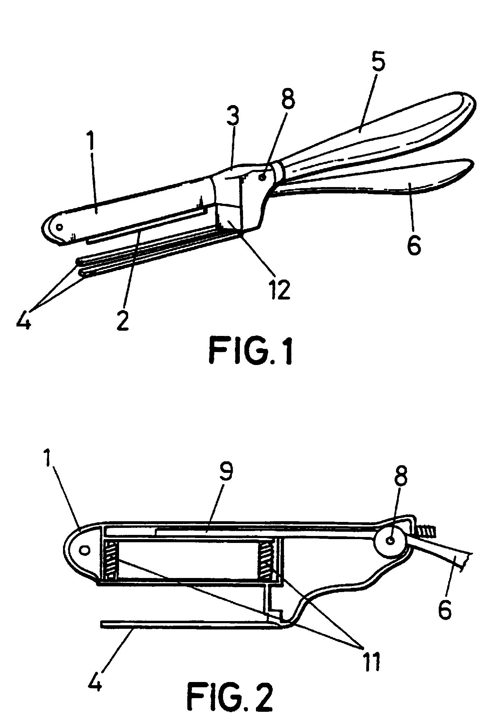

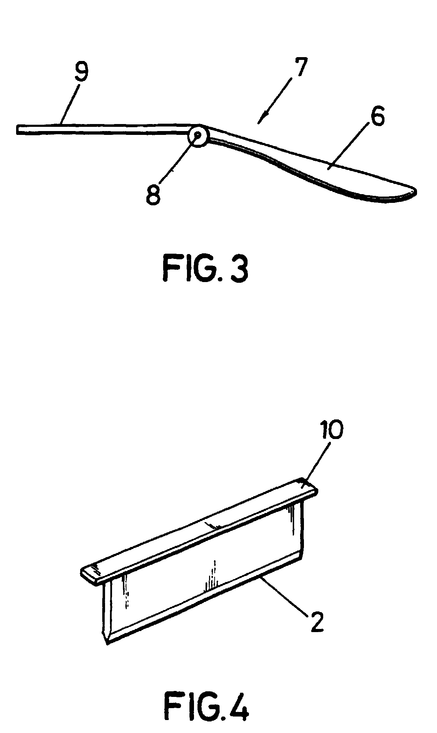

The handle or grip (5) is arranged as an extension of the central body (3), on the other side of the structure (1). Under the said handle, the arm (6) of the operating lever appears, referred to by the number 7 in Figure 3. The operating lever (7) oscillates through a paracentral point (8), while its resistance arm (9) remains inside the structure (1), in contact with the thickened edge or back (10) of the blade (2). The back (10) forms a perimetric flange for guiding the movement inside the structure and springs (11) make contact with its ends. By virtue of the said springs the blade (2) recovers its retracted position inside the structure (1). As may be deduced from Figure 2, the gyration of the lever (7) in the direction of movement of the arm 6 towards the grip (5), causes the blade (2) to emerge through the corresponding opening of the structure (1), advancing towards the pizza-supporting arms (4), producing a perfect and comfortable cut.

The reference number (12) designates the lower part of the central body (3) which is wedge-shaped to make it possible for the cutting device to move forward if it is necessary to carry out a cut of greater length than that of the edge of the blade (2).

## Claims

1. **A PIZZA CUTTING DEVICE** characterised in that it is comprised of a structure inside which a blade (2) is housed which is biased by springs (11) which maintain the blade in a retracted position; the blade may emerge through a lower slot when a manual lever (6) is actuated, close to the grip (5) arranged as an extension in a central body; under the structure (1) and joined to the said central body (3), there is a pair of parallel arms (4) arranged on each side of the blade's (2) vertical plane of operation, the item to be cut resting upon the said support arms (4).

2. **A PIZZA CUTTING DEVICE** as claimed in claim 1, chracterised in that the blade (2) is made up of a rectangular plate with a perimetric flange (10) on its longitudinal edge and opposite to the blade edge, upon which the springs (11) which maintain the blade (2) in a retracted position are resting.

3. **A PIZZA CUTTING DEVICE** as claimed in claim 1, chracterised in that the operating lever (7) of the blade (2) may gyrate at a central point (8) where it is pierced by an axis fixed to the walls of the central body (3), offering an inner arm (6) to the structure to press upon the blade (2), while the power arm (6) is situated under the grip (5), the lever returning to its initial position away from the grip (5) by means of the springs themselves (11) which bias the blade (2).

4. **A PIZZA CUTTING DEVICE** as claimed in foregoing claims, characterised in that the body (3) connecting the grip (5) and from which the structure (1) and the support arms (4) emerge, has a tapering (12) which allows the cutting device to move forward when the length of the cut to be carried out is greater than that of the blade.
